(19) Europäisches Patentamt
European Patent Office
Office européen des brevets

(11) **EP 4 571 293 A1**

(12) **EUROPEAN PATENT APPLICATION**

(43) Date of publication:
**18.06.2025 Bulletin 2025/25**

(21) Application number: **24218915.7**

(22) Date of filing: **11.12.2024**

(51) International Patent Classification (IPC):
**G01N 21/35** *(2014.01)*  **G01V 3/12** *(2006.01)*
**G01V 3/18** *(2006.01)*

(52) Cooperative Patent Classification (CPC):
**G01N 21/3581; G01V 3/12; G01V 8/18;**
G01N 2021/8841

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.12.2023 CN 202311695514**

(71) Applicants:
• **Tsinghua University**
  **Haidian District,**
  **Beijing 100084 (CN)**
• **NUCTECH COMPANY LIMITED**
  **Beijing 100084 (CN)**
• **Shenmutek Company Limited**
  **101312 Beijing (CN)**

(72) Inventors:
• **ZHAO, Ziran**
  **Beijing, 100084 (CN)**
• **YOU, Yan**
  **Beijing, 100084 (CN)**
• **JIN, Yingkang**
  **Beijing, 100084 (CN)**
• **ZHANG, Jinshan**
  **Beijing, 100084 (CN)**
• **FENG, Huacheng**
  **Beijing, 100084 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **TERAHERTZ SIGNAL-BASED IMAGE COLLECTION METHOD AND IMAGE COLLECTION SYSTEM**

(57) The present disclosure discloses a terahertz signal-based image collection method and system. The image collection method includes: providing two terahertz devices respectively on two sides of an inspection region; adjusting a posture of a swinging reflection plate of each terahertz device to reflect terahertz wave signals emitted by a target to be inspected in the inspection region, and preventing the terahertz wave signals of the target to be inspected reflected by the swinging reflection plate of one of the two terahertz devices from being incident on the swinging reflection plate of the other one of the two terahertz devices; and generating terahertz images of different sides of the target to be inspected based on terahertz signals reflected from the swinging reflection plates of the two terahertz devices.

FIG. 4

**Description**

TECHNICAL FIELD

At least one embodiment of the present disclosure relates to an image collection method, and in particular to a terahertz signal-based image collection method, and an image collection system for implementing the terahertz signal-based image collection method.

BACKGROUND

Since the terahertz wave has an ability of penetrating materials such as clinker and different types of clothing, terahertz wave passive imaging technology has broad potential applications in scenarios such as security inspections at important customs such as airports, scene monitoring.

Any object constantly radiates electromagnetic waves outward, and passive terahertz wave focal plane imaging technology is a technology that uses terahertz waves for imaging. The power of the terahertz waves radiated by different objects are different, and formed images are different. In security inspections, a focusing antenna combined with a high-sensitivity radiometer receiver is used to receive the power of terahertz waves radiated from the scene, imaging is performed on different objects, achieving an inspection of suspicious objects.

In order to simultaneously image a front and back of pedestrian in real time and improve inspection efficiency, two terahertz devices are usually arranged at front and rear positions of a channel for security inspection. However, based on this application mode in which the front and rear two devices are arranged opposite to each other, since the two devices are within each other's imaging depth of field range, scanning metal reflection plates inside the two devices will perform mutual imaging in many cases, affecting a contrast of an image formed by the terahertz device.

SUMMARY

In order to solve the above technical problems, embodiments of the present disclosure provide a terahertz signal-based image collection method and an image collection system, so as to avoid mutual imaging between two terahertz devices.

According to embodiments of a first aspect of the present disclosure, there is provided a terahertz signal-based image collection method, including:

providing two terahertz devices respectively on two sides of an inspection region;

adjusting a posture of a swinging reflection plate of each terahertz device to reflect terahertz wave signals emitted by a target to be inspected in the inspection region, and preventing the terahertz wave signals of the target to be inspected reflected by the swinging reflection plate of one of the two terahertz devices from being incident on the swinging reflection plate of the other one of the two terahertz device; and

generating terahertz images of different sides of the target to be inspected based on terahertz signals reflected from swinging reflection plates of the two terahertz devices.

According to embodiments of the present disclosure, adjusting the posture of the swinging reflection plate of each terahertz device includes:

for each terahertz device, rotating the swinging reflection plate of each terahertz device around a respective one of rotation shafts in parallel to each other, and

controlling a phase difference between the swinging reflection plates of the two terahertz devices to be outside a threshold range, so as to prevent the terahertz wave signals of the target to be inspected reflected by the swinging reflection plate of one of the two terahertz devices from being incident on the swinging reflection plate of the other of the two terahertz devices.

According to embodiments of the present disclosure, the threshold range is:

$$\left(-\frac{\pi}{8},\ \frac{\pi}{8}\right) - 2n\pi\ ;$$

where n is an integer.

According to embodiments of the present disclosure, the rotation shafts of the two terahertz devices are horizontally disposed and have the same height, and the rotation shaft of each swinging reflection plate is located on a geometric symmetry axis of the swinging reflection plate.

According to embodiments of the present disclosure, controlling the phase difference between the swinging reflection plates of the two terahertz devices to be outside the threshold range includes:
starting the two terahertz devices in a timing sequence, so that the phase difference between the swinging reflection plates of the two terahertz devices is outside the threshold range.

According to embodiments of the present disclosure, the image collection method further includes:
in response to the two terahertz devices being started, restarting at least one of the two terahertz devices in a case that the phase difference between the swinging reflection plates of the two terahertz devices is within the threshold range, so that the phase difference between the swinging reflection plates of the two terahertz devices is outside the threshold range after the restarting.

According to embodiments of the present disclosure, the two terahertz devices are started when the target to be inspected is located in a vertical plane between the two rotation shafts.

As a second aspect of the present disclosure, there is also provided a terahertz signal-based image collection system for implementing the above method. The image collection system includes two terahertz devices, the two terahertz devices are respectively located on two sides of an inspection region, to collect terahertz wave signals emitted from different sides of a target to be inspected in the inspection region, and each terahertz device includes:

a swinging reflection plate configured to rotate around a rotation shaft to perform a first reflection on the terahertz wave signals emitted by the target to be inspected;

a driving mechanism configured to drive the swinging reflection plate to rotate;

a collection mechanism configured to collect terahertz wave signals reflected by the swinging reflection plate; and

a controller configured to control the driving mechanism to drive the swinging reflection plate to rotate, so as to prevent the terahertz wave signals of the target to be inspected reflected by the swinging reflection plate of one of the two terahertz devices from being incident on the swinging reflection plate of the other one of the two terahertz devices.

According to embodiments of the present disclosure, the image collection system further includes:

a start module configured to issue a start instruction, where the start instruction is configured to start the two terahertz devices in a timing sequence;

where the start instruction is configured to start one terahertz device, and the start instruction further includes information of a start time and a threshold range of the other terahertz device.

According to embodiments of the present disclosure, the image collection system further includes:
a phase comparison module configured to, in response to the two terahertz devices being started, acquire a phase difference between the swinging reflection plates of the two terahertz devices, where the start module is configured to issue an adjustment instruction in a case that the phase difference between the swinging reflection plates of the two terahertz devices is within the threshold range, the adjustment instruction is configured to restart at least one of the two terahertz devices, so that the phase difference between the swinging reflection plates of the two terahertz devices is outside the threshold range after the restarting.

According to embodiments of the present disclosure, the two rotation shafts are horizontally disposed and symmetrical with respect to a vertical plane between the two rotation shafts.

According to embodiments of the present disclosure, the rotation shafts of the two terahertz devices have the same height, and the rotation shaft of each swinging reflection plate is located on a geometric symmetry axis of the swinging reflection plate.

According to embodiments of the present disclosure, swinging speeds of the swinging reflection plates of the two terahertz devices are the same.

According to embodiments of the present disclosure, the collection mechanism includes:

a fixed reflection plate configured to perform a second reflection on the terahertz wave signals reflected by the swinging reflection plate;

a radiometer array unit configured to obtain a voltage signal according to the terahertz wave signals after the second reflection.

According to embodiments of the present disclosure, the image collection system further includes an imaging module configured to obtain an image of the target to be inspected according to the voltage signal.

According to embodiments of the present disclosure, by adjusting the posture of the swinging reflection plate of each terahertz device, it is possible to prevent the terahertz wave signals of the target to be inspected reflected by the swinging reflection plate of one terahertz device from being incident on the swinging reflection plate of the other terahertz device, which may solve the problem of low contrast in the image formed based on the terahertz signals collected by the terahertz device caused by mutual imaging of the two terahertz devices.

BRIEF DESCRIPTION OF THE DRAWINGS

FIG. 1 shows a scene of collecting a terahertz wave signal using two terahertz devices.

FIG. 2 shows a diagram of a principle of collecting a terahertz wave by a terahertz device.

FIG. 3 shows a schematic diagram of an image formed by the terahertz devices in FIG. 1.

FIG. 4 shows a diagram of a principle of a terahertz signal-based image collection system provided according to embodiments of the present disclosure.

FIG. 5 shows a flowchart of a terahertz signal-based image collection method provided according to embodiments of the present disclosure.

Description for reference numbers:

110: Terahertz device;

101: Swinging reflection plate;

102: Collection mechanism;

1021: Lens component;

1022: Fixed reflection plate;

1023: Radiometer array unit;

1023-1: Radiometer array;

1023-2: Analog-to-digital converter;

103: Rotation shaft;

104: Driving mechanism;

105: Controller;

106: Ethernet interface;

120: Inspection region;

130: Target to be inspected;

140: Start module;

151: Phase monitoring unit;

152: Phase comparison unit;

160: Ethernet switch;

170: Imaging module.

DETAILED DESCRIPTION OF EMBODIMENTS

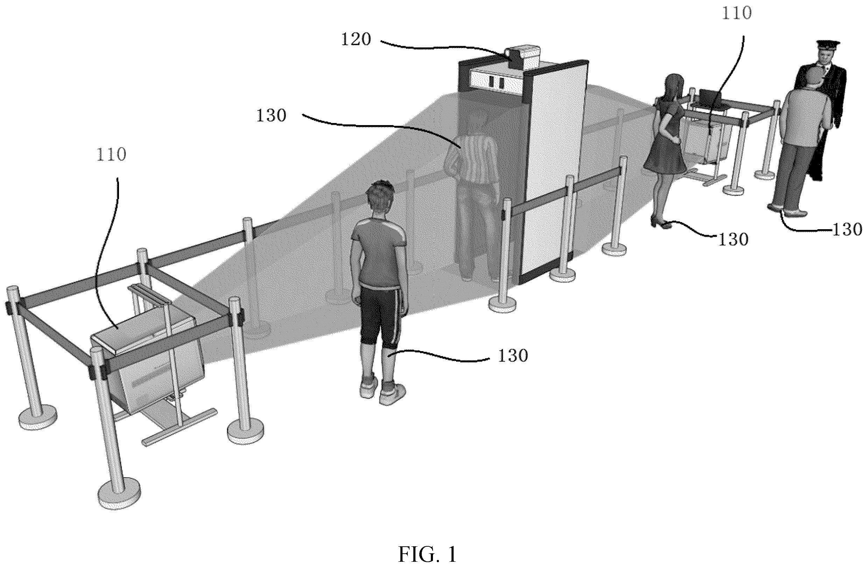

In a process of implementing the present disclosure, it was found that when two terahertz devices are used to inspect a target to be inspected, the two terahertz devices will perform mutual imaging. Reasons for the mutual imaging of the two terahertz devices will be explained below in conjunction with FIG. 1 to FIG. 2.
FIG. 1 shows a scene of collecting a terahertz wave signal using two terahertz devices.

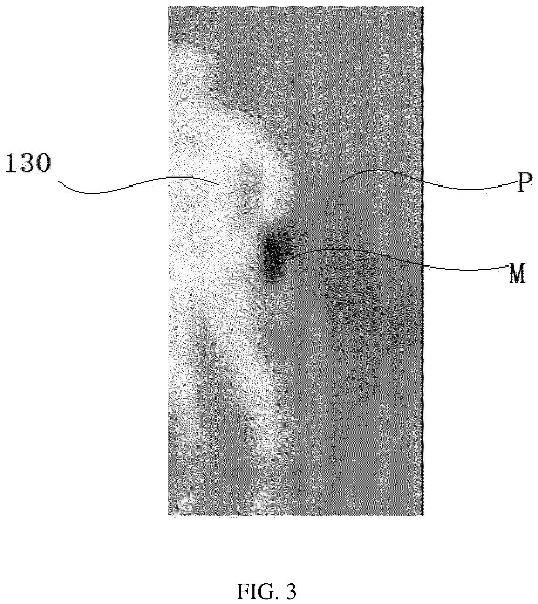

As shown in FIG. 1, two terahertz devices 110 are opposite to each other, and a distance between the two devices is approximately equal to twice their optimal imaging distance. An inspection region 120 is between the two devices. The inspection region 120 may be, for example, a security inspection channel. The security inspection channel may be provided with a security inspection door. The security inspection door may be a metal security inspection door or a millimeter wave security inspection door. A target to be inspected 130 (for example may be a pedestrian) enters the security inspection channel, and the two terahertz devices 110 simultaneously perform imaging on a front and back of the target to be inspected 130. Images formed by the two terahertz devices 110 are displayed on a monitor simultaneously. If the target to be inspected 130 carries a suspicious object, the terahertz device 110 will give an alarm box and a sound prompt.

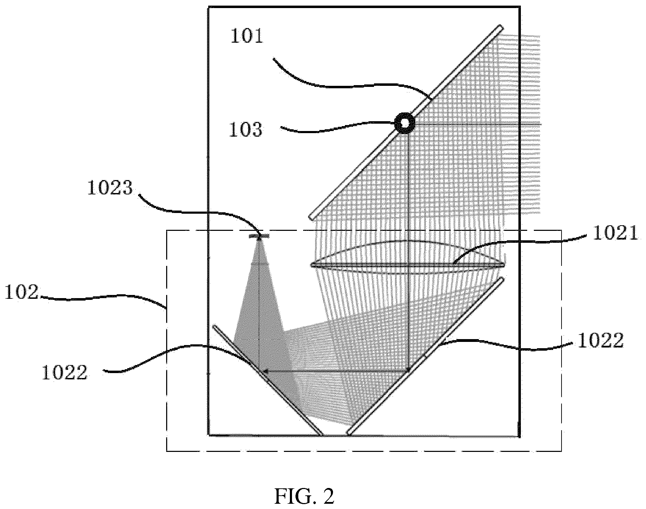

FIG. 2 shows a diagram of a principle of collecting a terahertz wave by a terahertz device.
As shown in FIG. 2, each terahertz device 110 includes a swinging reflection plate 101 and a collection mechanism 102. The collection mechanism 102 includes a lens component 1021, two fixed reflection plates 1022, and a radiometer array unit 1023. The swinging reflection plate 101 swings around a rotation shaft 103 of the swinging reflection plate 101 in a pitch direction under driving of a motor to change a direction of receiving and reflecting terahertz wave signals. The terahertz wave signals emitted by the target to be inspected 130 are reflected by the swinging reflection plate 101, converged by the lens component 1021, then sequentially reflected by the two fixed reflection plates 1022, and then enter the radiometer array unit 1023.
In an image collection system with the two terahertz devices opposite to each other, since each terahertz device 110 is within an imaging depth of field range of the other terahertz device 110, if the terahertz wave signals of the target to be inspected 130 reflected by the swinging reflection plate 101 of one terahertz device 110 is incident on the swinging reflection plate 101 of the other terahertz device 110, the two terahertz devices 110 will perform mutual imaging, thereby resulting in a black spot M (as shown in FIG. 3) in the image P formed based on the two terahertz devices 110. This black spot not only affects a contrast of the image, such as causing the background to change from black to gray, affecting an extraction of a contour of the target to be inspected 130 and a suspicious object, but also even will be considered as a suspicious object in an automatic recognition alarm algorithm, seriously affecting alarm accuracy.
Hereinafter, embodiments of the present disclosure will be described with reference to the accompanying drawings. However, it should be understood that these descriptions are merely exemplary and not intended to limit the scope of the present disclosure. In the following detailed description, for ease of explanation, many specific details are elaborated to provide a comprehensive understanding of embodiments of the present disclosure. However, it is apparent that one or more embodiments may also be implemented without these specific details. Furthermore, in the following description, descriptions of well-known structures and techniques have been omitted to avoid unnecessary confusion of concepts of the present disclosure.

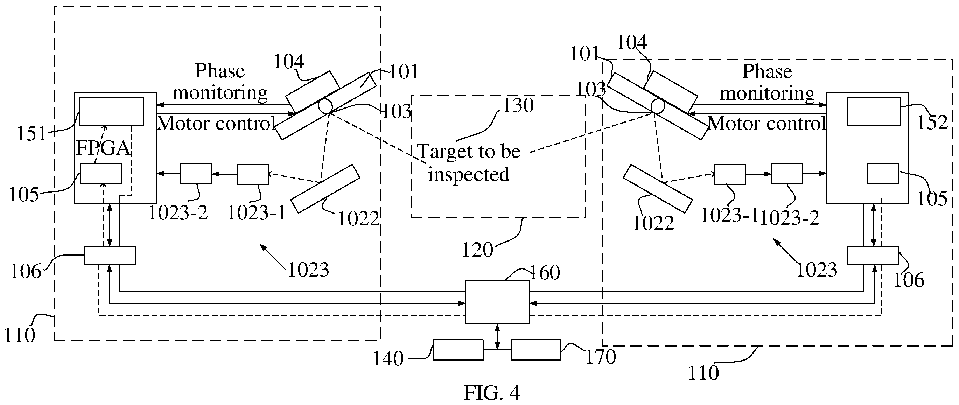

FIG. 4 shows a schematic diagram of a terahertz signal-based image collection system provided according to embodiment of the present disclosure.

As shown in FIG. 1, FIG. 2 and FIG. 4, the terahertz signal-based image collection system includes two terahertz devices 110. The two terahertz devices 110 are located on two sides of an inspection region 120 respectively to perform terahertz imaging on different sides (such as a front side and a back side) of the target to be inspected 130 in the inspection region 120. Each terahertz device 110 also includes a driving mechanism 104, a collection mechanism 102, and a controller 105.

The swinging reflection plate 101 is configured to rotate around a rotation shaft 103 to change a reflection angle of an emitting surface (or a receiving surface) of the swinging reflection plate 101, so as to perform a first reflection on the terahertz wave signals emitted by the target to be inspected 130. The driving mechanism 104 is configured to drive the swinging reflection plate 101 to rotate. The collection mechanism 102 is configured to collect terahertz wave signals reflected by the swinging reflection plate 101. The controller 105 is configured to control the driving mechanism 104 to drive the swinging reflection plate 101 to rotate, so as to prevent the terahertz wave signals of the target to be inspected 130 reflected by the swinging reflection plate 101 of the terahertz device from being incident on the swinging reflection plate 101 of the other terahertz device 110. The driving mechanism 104 may be, for example, a motor.

According to embodiments of the present disclosure, by using the driving mechanism 104 to drive the swinging reflection plate 101 to rotate, the terahertz wave signals of the target to be inspected 130 reflected by the swinging reflection plate 101 of the terahertz device are prevented from being incident on the swinging reflection plate 101 of the other terahertz device 110. That is to say, the terahertz wave signals of the target to be inspected 130 reflected by the swinging reflection plate 101 of one terahertz device may not be incident on the swinging reflection plate 101 of the other terahertz device, so that the swinging reflection plates 101 of the two terahertz devices 110 do not affect each other when receiving the terahertz signals, thereby solving the problem of low contrast in the image formed by the terahertz devices 110 caused by mutual imaging of the two terahertz devices 110.

According to embodiments of the present disclosure, the image collection system further includes a start module 140. The start module 140 is used to issue a start instruction. The start instruction issued by the start module 140 is in a form of an Ethernet broadcast packet, which is replicated in an Ethernet switch 160 and sent simultaneously to the two terahertz devices 110. The two terahertz devices 110 are both provided with an Ethernet interface 106 to receive the Ethernet broadcast packet. This start instruction is used to start the two terahertz devices 110 in a timing sequence. The start instruction is used to start one terahertz device 110, and the start instruction 110 also includes information of a start time and a threshold range of the other terahertz device 110. For example, the start instruction includes setting a master-slave relationship between the two terahertz devices (i.e. the master device starts first and the slave device starts later). The start instruction specifies a preset phase difference that the swinging reflection plates 101 of the two devices need to meet, and the preset phase difference is outside the threshold range. After receiving the start instruction, the master device starts immediately, and the slave device delays starting according to the preset phase difference that requires to be met after receiving the start instruction.

According to embodiments of the present disclosure, the image collection system further includes a phase comparison module (not shown in the figure). In response to one of the two terahertz devices 110 being started, the phase comparison module is used to acquire the phase difference between the swinging reflection plates 101 of the two terahertz devices 110. In a case that the phase difference between the swinging reflection plates 101 of the two terahertz devices 110 is within the threshold range (indicating that the terahertz wave signals of the target to be inspected 130 reflected by the swinging reflection plate 101 of one terahertz device may be incident on the swinging reflection plate 101 of the other terahertz device), the start module 140 issues an adjustment instruction. The adjustment instruction is used to restart at least one of the two terahertz devices 110, so that the phase difference between the swinging reflection plates 101 of the two terahertz devices 110 is outside the threshold range after the restarting, and the terahertz wave signals of the target to be inspected 130 reflected by the swinging reflection plate 101 of one terahertz device may not be incident on the swinging reflection plate 101 of the other terahertz device 101. For each terahertz device 110, the controller 105 may use a crystal oscillator as a timing reference for a field programmable gate array (FPGA) to generate controlling signals for the swinging reflection plate 101. Although nominal frequencies of the crystal oscillators of the two devices are the same, there is actually a frequency difference. Taking the phase difference between the two swinging reflection plates 101 when the later started terahertz device 110 is started as a reference, the phase difference between the two swinging reflection plates 101 of the two terahertz devices 110 will change periodically during operation. For example, when the later started terahertz device 110 is started, the frequency difference between the crystal oscillators of the two devices is 1ppm. After 1 hour, the time difference between the swinging reflection plates of the two devices will change by 3.6ms. Therefore, during operation of the two devices, it is needed to adjust the phase difference between the swinging reflection plates 101 of the two devices, so that the phase difference between the swinging reflection plates 101 of the two terahertz devices 110 is always outside the threshold range, so as to ensure that the terahertz wave signals of the target to be inspected 130 reflected by the swinging reflection plate 101 of one terahertz device may not be incident on the swinging reflection plate 101 of the other terahertz device. The phase comparison module includes a phase monitoring unit 151 and a phase comparison unit 152. The phase monitoring unit 151 is used to send a phase of the earlier started terahertz device 110 to the phase comparison unit 152. The phase comparison unit 152 is used to obtain the phase difference between the swinging reflection plates 101 of the two terahertz devices 110 according to the phase of the swinging reflection plate 101 of the earlier started terahertz device 110.

According to embodiments of the present disclosure, the phase monitoring unit 151 and the phase comparison unit 152 may be provided on any one of the two terahertz devices 110, or provided outside the two terahertz devices 110.

According to embodiments of the present disclosure, the rotation shafts 103 of the swinging reflection plates 101 of the two terahertz devices 110 are horizontally disposed and symmetrical with respect to a vertical plane between the two rotation shafts 103. In this way, it is easy to control a relative posture of the two swinging reflection plates 101. When the target to be inspected 130 is located in the vertical plane, the two terahertz devices 110 may achieve full-range imaging of the target to be inspected, and contours of images of the target to be inspected 130 obtained by the two terahertz devices 110 are substantially the same. On this basis, by comparing the images formed by the two terahertz devices 110, the comparison and recognition of feature parts of the target to be inspected 130 may be achieved.

According to embodiments of the present disclosure, the rotation shafts 103 of the two terahertz devices 110 have the same height, and the rotation shaft of each swinging reflection plate is located on a geometric symmetry axis of the swinging reflection plate, so as to control the relative posture of the swinging reflection plates 101 of the two terahertz devices 110. According to embodiments of the present disclosure, the rotation shafts 103 of the two terahertz devices 110 are disposed in parallel and have the same height, and when the target to be inspected 130 is located in the middle between the two rotation shafts 103, it may ensure that a reception angle of terahertz waves radiated by the target to be inspected 130 by the terahertz devices is optimal, which may furthest improve the clarity and resolution of imaging.

Although embodiments of the relative position or posture of the rotation shafts 103 of the two swinging reflection plates 101 and mounting positions of the rotation shafts 103 on the swinging reflection plates 101 have been described above, the embodiments of the present disclosure are not limited to this. Based on the inventive concept of the present disclosure, those skilled in the art may understand that the relative position or posture of the rotation shafts 103 of two swinging reflection plates 101 may be changed, for example, the rotation shafts 103 have different heights, and/or the two rotation shafts are not parallel to each other in space, and/or the rotation shafts 103 are disposed at the bottom or upper part of the swinging reflection plate 101. However, once the mounting of the two rotation shafts 103 is completed, the relative position relationship, relative posture, and position of the two rotation shafts 103 on the swinging reflection plates are fixed. Based on spatial geometry principles, the relative position and posture relationship of the two swinging reflection plates may be obtained through calculation, and the terahertz wave signals of the target to be inspected 130 reflected by the swinging reflection plate 101 of one terahertz device may not be incident on the swinging reflection plate 101 of the other terahertz device.

According to embodiments of the present disclosure, swinging speeds of the swinging reflection plates of the two terahertz devices 110 are the same, which facilitates the adjustment of the phase difference between the swinging reflection plates of the two terahertz devices 110.

According to embodiments of the present disclosure, the collection mechanism 102 includes a fixed reflection plate 1022 and a radiometer array unit 1023. The fixed reflection plate 1022 is used to perform a second reflection on the terahertz wave signals reflected by the swinging reflection plate. The radiometer array unit 1023 is used to obtain a voltage signal according to the terahertz wave signals after the second reflection.

According to embodiments of the present disclosure, the image collection system further includes an imaging module 170. The imaging module 170 is used to obtain an image of the target to be inspected according to the voltage signal obtained by the radiometer array unit 1023.

According to embodiments of the present disclosure, the start module 140 and the imaging module 170 may be different modules in a PC.

According to embodiments of the present disclosure, the radiometer array unit 1023 includes a radiometer array 1023-1 and an analog-to-digital converter 1023-2. The radiometer array 1023-2 is used to obtain analog voltage signals according to the terahertz wave signals after the second reflection. The analog-to-digital converter 1023-2 is used to convert the analog voltage signals into digital voltage signals.

According to embodiments of the present disclosure, the above system further includes a guidance device (not shown in the figure) used to guide the target to be inspected 130 to the middle portion between the two rotation shafts 103. The guidance device includes an indicator or sign, an automatic conveying device, or a voice prompt component, a photography component, and a display component. The indicator or sign is used to guide the target to be inspected 130 to move to the middle portion of the inspection region. The automatic conveying device is used to automatically convey the target to be inspected 130 to the middle portion of the inspection region. The position of the target to be inspected is obtained by the photography component, and related operators recognize the position of the target to be inspected on the display component and prompt the target to be inspected to move to the middle portion through the voice prompt component.

According to embodiments of the present disclosure, by controlling the phase difference between the swinging reflection plates 101 of the two terahertz devices 110 opposite to each other, the terahertz wave signals of the target to be inspected 130 reflected by the swinging reflection plate 101 of one terahertz device may not be incident on the swinging reflection plate 101 of the other terahertz device, thereby avoiding mutual imaging of the two terahertz devices 110. Based on the terahertz signals collected by the two terahertz devices 110 opposite to each other, black spots caused by mutual imaging are avoided.

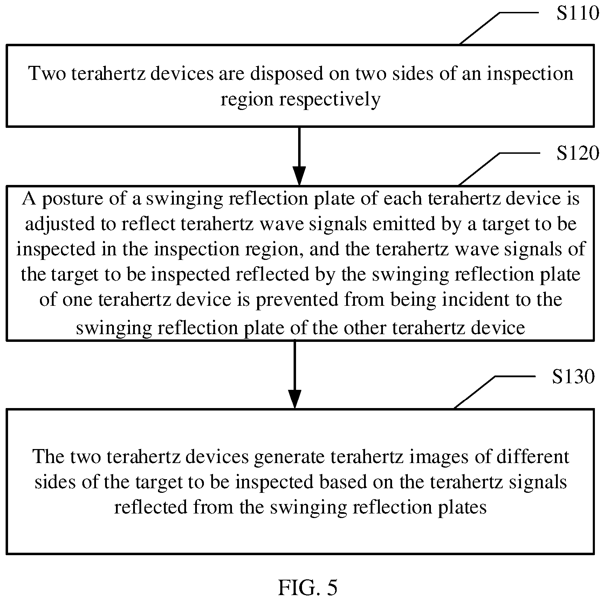

FIG. 5 shows a flowchart of a terahertz signal-based image collection method provided according to embodiments of the present disclosure.

In some embodiments, as shown in FIG. 4 and FIG. 5, the image collection method using the image collection system described in any of the above embodiments includes operation S110 to operation S130.

In operation S110, two terahertz devices 110 are disposed on two sides of an inspection region 120 respectively.

In operation S120, a posture of a swinging reflection plate 101 of each terahertz device 110 is adjusted to reflect terahertz wave signals emitted by a target to be inspected 130 in the inspection region 120, and the terahertz wave signals of the target to be inspected reflected by the swinging reflection plate 101 of one terahertz device 110 is prevented from being incident on the swinging reflection plate 101 of the other terahertz device 110. That is to say, the terahertz wave signals of the target to be inspected 130 reflected by the swinging reflection plate 101 of one terahertz device 110 may not be incident on the swinging reflection plate 101 of the other terahertz device.

In operation S130, the two terahertz devices 110 generate terahertz images of different sides of the target to be inspected based on the terahertz signals reflected from the swinging reflection plates 101.

According to embodiments of the present disclosure, by adjusting the posture of the swinging reflection plate 101 of each terahertz device 110, the terahertz wave signals of the target to be inspected reflected by the swinging reflection plate 101 of one terahertz device 110 are prevented from being incident on the swinging reflection plate 101 of the other terahertz device 110, so that the swinging reflection plates 101 of the two terahertz devices 110 do not affect each other when receiving terahertz signals. This may solve the problem of low contrast in the images formed based on the terahertz signals collected by the terahertz device caused by mutual imaging of the two terahertz devices 110.

According to embodiments of the present disclosure, in operation S120, adjusting the posture of the swinging reflection plate 101 of each terahertz device 110 includes operation S121 to operation S122.

In operation S121, for each terahertz device 110, the swinging reflection plate 101 of each terahertz device 110 is rotated around a respective one of rotation shafts in parallel to each other.

In operation S122, a phase difference between the swinging reflection plates 110 of the two terahertz devices 110 is controlled to be outside a threshold range, so as to prevent the terahertz wave signals of the target to be inspected 130 reflected by the swinging reflection plate 1011 of one of the two terahertz devices from being incident on the swinging reflection plate 101 of the other one of the two terahertz devices 110.

Controlling the phase difference between the swinging reflection plates 101 of the two terahertz devices 110 means controlling an angle between the swinging reflection plates 101 of the two terahertz devices 110. When the angle between the swinging reflection plates 101 of the two terahertz devices 110 is large enough, it may prevent the terahertz wave signals of the target to be inspected 130 reflected by the swinging reflection plate 101 of one terahertz device 110 from being incident on the swinging reflection plate 101 of the other terahertz device 110.

According to embodiments of the present disclosure, by controlling the phase difference between the swinging reflection plates 101 of the two terahertz devices 110, the black spots formed by mutual imaging of the two terahertz devices 110 may be eliminated, thereby enhancing the contrast of the image formed by the terahertz devices 110.

According to embodiments of the present disclosure, the threshold range is:

$$\left(-\frac{\pi}{8}, \ \frac{\pi}{8}\right) - 2n\pi \qquad (1)$$

In expression (1), n is an integer, such as -1, -2, 0, 1, 2, and so on. When the phase difference between the swinging reflection plates 101 of the two terahertz devices 110 is outside the range of expression (1), the angle between the swinging reflection plates 101 of the two terahertz devices 110 is large enough to prevent the terahertz wave signals of the target to be inspected 130

reflected by the swinging reflection plate 101 of one terahertz device 110 from being incident on the swinging reflection plate 101 of the other terahertz device 110. When the phase difference between the swinging reflection plates 101 of the two terahertz devices 110 is within the range of expression (1), for example, when the phase difference between the swinging reflection plates 101 of the two terahertz devices 110 is 0, the swinging reflection plates 101 of the two terahertz devices 110 are parallel to each other, that is, the angle between the swinging reflection plates 101 of the two terahertz devices 110 is 0. In this case, the terahertz wave signals of the target to be inspected 130 reflected by the swinging reflection plate 101 of one terahertz device 110 may be incident on the swinging reflection plate 101 of the other terahertz device 110, causing the two terahertz devices 110 to perform mutual imaging.

According to embodiments of the present disclosure, the rotation shafts 103 of the two terahertz devices 110 are horizontally disposed and have the same height, and the rotation shaft 103 of each swinging reflection plate 101 is located on the geometric symmetry axis of the swinging reflection plate 101, so as to facilitate the adjustment of the phase difference between the swinging reflection plates 101 of the two terahertz devices 110.

For example, in the case where the rotation shafts 103 of the swinging reflection plates 101 of the two terahertz devices 110 are horizontally disposed, the two rotation shafts 103 are symmetrically disposed with respect to a vertical plane between the two rotation shafts 103, and the rotation shaft of each swinging reflection plate is located on the geometric symmetry axis of the swinging reflection plate, a status that each swinging reflection plate 101 is parallel to the vertical plane is set as an initial status, the phase at the initial status is zero, and the phase of each swinging reflection plate 101 in any status is relative to the zero phase at the initial status.

According to embodiments of the present disclosure, in operation 122, controlling the phase difference between the swinging reflection plates of the two terahertz devices to be outside the threshold range includes starting the two terahertz devices in a timing sequence, so that the phase difference between the swinging reflection plates of the two terahertz devices is outside the threshold range.

According to embodiments of the present disclosure, the swinging reflection plates 101 of the two terahertz devices 110 often have the same phase, the same phase change, and the same swinging speed when being started. Controlling the phase difference between the swinging reflection plates 101 of the two terahertz devices 110 to be outside the threshold range may be achieved by controlling the start time of the two terahertz devices 110.

According to embodiments of the present disclosure, the image collection method further includes: in response to the two terahertz devices 110 being started, restarting at least one of the two terahertz devices 110 when the phase difference between the swinging reflection plates 101 of the two terahertz devices 110 is within a threshold range, so that the phase difference between the swinging reflection plates 101 of the two terahertz devices 110 is outside the threshold range after the restarting. By restarting at least one of the two terahertz devices 110, the posture of the swinging reflection plate 101 of at least one of the two terahertz devices 110 is adjusted, so that the phase difference between the swinging reflection plates 101 of the restarted two terahertz devices 110 is outside the threshold range.

According to embodiments of the present disclosure, the two terahertz devices 110 are started when the target to be inspected 130 is located in a vertical plane equidistant from the two rotation shafts 103. The vertical plane equidistant from the two rotation shafts 103 substantially coincides with the inspection region 120. When the target to be inspected 130 is located in the vertical plane equidistant from the two rotation shafts 103, the two terahertz devices 110 may better inspect the target to be inspected 130.

According to embodiments of the present disclosure, by controlling the phase difference between the swinging reflection plates 101 of the two terahertz devices 110 opposite to each other, the terahertz wave signals of the target to be inspected 130 reflected by the swinging reflection plate 101 of one terahertz device may not be incident on the swinging reflection plate 101 of the other terahertz device, thereby avoiding mutual imaging of the two terahertz devices 110. Based on the terahertz signals collected by the two terahertz devices 110 opposite to each other, black spots caused by mutual imaging are avoided.

The specific embodiments described above provide further detailed explanations of the purpose, technical solutions, and beneficial effects of the present disclosure. It should be understood that the above are only specific embodiments of the present disclosure and are not intended to limit the present disclosure. Any modifications, equivalent substitutions, improvements, etc. made within the spirit and principles of the present disclosure should be included in the scope of protection of the present disclosure.

**Claims**

1.  A terahertz signal-based image collection method, comprising:

    providing (S110) two terahertz devices (110) respectively on two sides of an inspection region (120);
    adjusting (S120) a posture of a swinging reflection plate (101) of each terahertz device (110) to reflect terahertz wave signals emitted by a target to be inspected (130) in the inspection region (120), and preventing terahertz wave signals of the target to be inspected (130) reflected by the swinging reflection plate (101) of one of the two terahertz devices (110) from being incident on the swinging reflection plate (101) of the other one of the two terahertz devices (110); and generating (S130) terahertz images of different sides of the target to be inspected (130) based on terahertz signals reflected from swinging reflection plates (101) of the two terahertz devices (110).

2. The image collection method of claim 1, wherein adjusting (S120) the posture of the swinging reflection plate (101) of each terahertz device (110) comprises:

for each terahertz device (110), rotating the swinging reflection plate (101) of each terahertz device (110) around a respective one of rotation shafts (103) in parallel to each other, and controlling a phase difference between the swinging reflection plates (101) of the two terahertz devices (110) to be outside a threshold range, so as to prevent the terahertz wave signals of the target to be inspected (130) reflected by the swinging reflection plate (101) of one of the two terahertz devices (110) from being incident on the swinging reflection plate (101) of the other one of the two terahertz devices (110).

3. The image collection method of claim 2, wherein the rotation shafts (103) of the two terahertz devices (110) are horizontally disposed and have the same height, and the rotation shaft (103) of each swinging reflection plate (101) is located on a geometric symmetry axis of the swinging reflection plate (101).

4. The image collection method of claim 3, wherein the threshold range is:

$$\left(-\frac{\pi}{8}, \ \frac{\pi}{8}\right) - 2n\pi \ ;$$

where n is an integer.

5. The image collection method of any one of claims 2 to 4, wherein controlling the phase difference between the swinging reflection plates (101) of the two terahertz devices (110) to be outside the threshold range comprises:
starting the two terahertz devices (110) in a timing sequence, so that the phase difference between the swinging reflection plates (101) of the two terahertz devices (110) is outside the threshold range.

6. The image collection method of any one of claims 2 to 4, further comprising:
in response to the two terahertz devices (110) being started, restarting at least one of the two terahertz devices (110) in a case that the phase difference between the swinging reflection plates (101) of the two terahertz devices (110) is within the threshold range, so that the phase difference between the swinging reflection plates (101) of the two terahertz devices (110) is outside the threshold range after the restarting.

7. The image collection method of any one of claims 2 to 4, wherein the two terahertz devices (110) are started when the target to be inspected (130) is located in a vertical plane equidistant from the two rotation shafts (103).

8. A terahertz signal-based image collection system for implementing the method of any one of claims 1 to 7, wherein the image collection system comprises two terahertz devices (110) respectively located on two sides of an inspection region (120), to collect terahertz wave signals emitted from different sides of a target to be inspected (130) in the inspection region (120), and each terahertz device (110) comprises:

a swinging reflection plate (101) configured to rotate around a rotation shaft (103) to perform a first reflection on the terahertz wave signals emitted by the target to be inspected (130); a driving mechanism (104) configured to drive the swinging reflection plate (101) to rotate; a collection mechanism (102) configured to collect terahertz wave signals reflected by the swinging reflection plate (101); and a controller (105) configured to control the driving mechanism (104) to drive the swinging reflection plate (101) to rotate, so as to prevent the terahertz wave signals of the target to be inspected (130) reflected by the swinging reflection plate (101) of one of the two terahertz devices (110) from being incident on the swinging reflection plate (101) of the other one of the two terahertz devices (110).

9. The image collection system of claim 8, wherein the two rotation shafts (103) are horizontally disposed and symmetrical with respect to a vertical plane between the two rotation shafts (103).

10. The image collection system of claim 8, wherein the rotation shafts (103) of the two terahertz devices (110) have the same height, and the rotation shaft (103) of each swinging reflection plate (101) is located on a geometric symmetry axis of the swinging reflection plate (101).

11. The image collection system of any one of claims 8 to 10, further comprising:

a start module (140) configured to issue a start instruction, wherein the start instruction is configured to start the two terahertz devices (110) in a timing sequence; wherein the start instruction is configured to start one terahertz device (110), and the start instruction further comprises information of a start time and a threshold range of the other terahertz device (110).

12. The image collection system of any one of claims 8 to 10, further comprising: a phase comparison module configured to, in response to the two terahertz devices (110) being started, acquire a phase difference between the swinging reflection plates (101) of the two terahertz devices (110), wherein the start module (140) is configured to issue an adjustment instruction in a case that the phase difference between the swinging reflection plates (101) of the two terahertz devices (110) is within the threshold range, the adjustment instruction is configured to restart at least one of the two terahertz devices (110), so that the phase difference between the swinging reflection plates (101) of the two terahertz devices (110) is outside the threshold range after the restarting.

13. The image collection system of any one of claims 8 to 10, wherein swinging speeds of the swinging reflection plates (101) of the two terahertz devices (110) are the same.

14. The image collection system of any one of claims 8 to 10, wherein the collection mechanism (102) comprises:

a fixed reflection plate (1022) configured to perform a second reflection on the terahertz wave signals reflected by the swinging reflection plate (101); and a radiometer array unit (1023) configured to obtain a voltage signal according to the terahertz wave signals after the second reflection.

15. The image collection system of claim 14, wherein the image collection system comprises: an imaging module (170) configured to obtain an image of the target to be inspected (130) according to the voltage signal.

FIG. 1

FIG. 2

FIG. 3

FIG. 4

EP 4 571 293 A1

S110

Two terahertz devices are disposed on two sides of an inspection region respectively

S120

A posture of a swinging reflection plate of each terahertz device is adjusted to reflect terahertz wave signals emitted by a target to be inspected in the inspection region, and the terahertz wave signals of the target to be inspected reflected by the swinging reflection plate of one terahertz device is prevented from being incident to the swinging reflection plate of the other terahertz device

S130

The two terahertz devices generate terahertz images of different sides of the target to be inspected based on the terahertz signals reflected from the swinging reflection plates

FIG. 5

Europäisches
Patentamt
European
Patent Office
Office européen
des brevets

# EUROPEAN SEARCH REPORT

**Application Number**

EP 24 21 8915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 948 724 A (SHANGHAI HENGLIN PHOTOELECTRIC TECH CO LTD) 17 November 2020 (2020-11-17) | 1-13 | INV. G01N21/35 G01V3/12 |
| Y | * paragraphs [0005] - [0008], [0031] - [0039]; figures 2,7,8 * | 14,15 | G01V3/18 |
| Y | CN 110 031 907 A (XIAN TIANHE DEFENSE TECH CO LTD) 19 July 2019 (2019-07-19) * figure 1 * | 14,15 | |
| A | CN 113 514 417 A (SHANGHAI HENGLIN PHOTOELECTRIC TECH CO LTD ET AL.) 19 October 2021 (2021-10-19) * paragraphs [0003] - [0020]; figures 3,6,7 * | 1-15 | |
| A | CN 109 343 142 A (10TH RESEARCH INST CHINA ELECTRONICS TECH GROUP CORP) 15 February 2019 (2019-02-15) * figure 1 * | 1-15 | |

**TECHNICAL FIELDS SEARCHED (IPC)**

G01N
G01V

The present search report has been drawn up for all claims

| Place of search | Date of completion of the search | Examiner |
|---|---|---|
| Munich | 1 April 2025 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 21 8915

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | Publication date |
|---|---|---|---|---|
| CN 111948724 | A | 17-11-2020 | NONE | |
| CN 110031907 | A | 19-07-2019 | NONE | |
| CN 113514417 | A | 19-10-2021 | NONE | |
| CN 109343142 | A | 15-02-2019 | NONE | |

EPO FORM P0459

For more details about this annex : see Official Journal of the European Patent Office, No. 12/82